# EUROPEAN PATENT APPLICATION

(11) **EP 2 738 718 A1**
(43) Date of publication of application: **04.06.2014**
(21) Application number: 13193395.4
(22) Date of filing: 19.11.2013
(51) Int. Cl.: G06Q 10/06, G06Q 50/04

(54) **System and method for monitoring the efficiency of production**

(30) Priority: 28.11.2012 FI 20126248
(71) Applicant: Control Express Finland Oy, 57101 Savonlinna (FI)
(72) Inventor: Juutilainen, Timo, 57600 Savonlinna (FI); Manninen, Hannu, 02710 Espoo (FI)
(74) Representative: LEITZINGER OY

(57) **Abstract**

The object of the invention is a system (1) for monitoring the efficiency of production. The system is characterised in that it comprises measuring means (3) adapted to measure the vibration, movement, inclination and/or position of the machine used; inference means (4) which are adapted to infer, by means of the measurements of the measuring means, when the machine (2) is working, and which are connected to the measuring means (3); identification means (5) adapted to identify the work to be carried out and/or the employees involved in the work stages; and compilation means (6) which are connected to the inference means (4) and the identification means (5), the compilation means (6) being adapted to compile the information produced by the inference means (4) and identification means (5), and which compilation means (6) comprise means (7) for transferring the information to scanning devices. A further object of the invention is a corresponding method for monitoring the efficiency of production.

## Description

The invention relates to increasing the efficiency of production. The object of the invention is a system for monitoring the efficiency of production. A further object of the invention is a corresponding method of monitoring.

The efficiency of production is becoming increasingly important in industry for several different reasons. It is, therefore, also important to be able to monitor the efficiency of production efficiently. As criteria for the efficiency of production are used, for example, percentages of maximum production efficiency, taking into account the working time, the overall turnaround time, the idle time and the ratio of wasted resources. The work is most efficient if all the above-mentioned factors are at a minimum.

Previously are known production efficiency monitoring methods which use programmable logic. In most cases, a machine's own logic includes an additional program or a machine is provided with a new additional logic.

The problem with the above solutions is that the equipment must be connected to the machine's control systems, which is difficult in practice and increases both equipment and work costs. From additional connections may follow, among other things, that the manufacturer's guarantee is not valid if changes have been made in the original logic. Furthermore, programming and alteration work is expensive and time-consuming, particularly if the machine-specific primary data is insufficient.

Methods are further known in which the user informs the system of the work to be carried out through a separate input panel. In addition, methods are also known in which the work order includes bar codes or a computer key board by means of which the user registers into and out of work.

In these solutions, the greatest problem is the relatively large amount of incorrect information. The user may, for example, forget to enter the work, inadvertently enter the work incorrectly, or even intentionally misrepresent the service data. In addition, all machines require auxiliary equipment for making monitoring entries. Previously are not known systems or methods which are rapid to install and in the use of which human errors cannot affect the monitoring results. The aim of the present invention is to provide a straightforward and rapidly installed system which does not require interfering with the machine's internal operation. The system according to the invention can also be called an independent sensor-based production efficiency monitoring system which does not require connections with the machine's control systems or any separate measures from the user. A further aim of the invention is to provide a machine-independent, retrofitted system and method for monitoring the efficiency of production.

The system according to the invention comprises measuring means adapted to measure the vibration, movement, inclination and/or position of the machine used; inference means which are adapted to infer, by means of the measurements of the measuring means, when the machine is working, and which are connected to the measuring means; identification means, and compilation means which are connected to the inference means and the identification means, the compilation means being adapted to compile the information produced by the inference means and identification means, and which compilation means comprise means for transferring the information to scanning devices. The system according to the invention is characterised in that the said identification means are adapted to identify the work to be carried out and/or the employees involved in the work stages and comprise electrically readable ID identification.

In the method according to the invention are used retrofitted, machine-independent means by means of which the vibration, movement, inclination and/or position of the machine used are measured; on the basis of the measurements is inferred when the machine is working; information is determined, and the inferred and determined information is compiled and forwarded. The method according to the invention is characterised in that in the said determination (5) of information, the information determined is the work to be carried out and in the determination (5) of information is used electrically readable ID identification.

Preferred embodiments of the invention are described in the following, with reference to the accompanying drawing, in which:

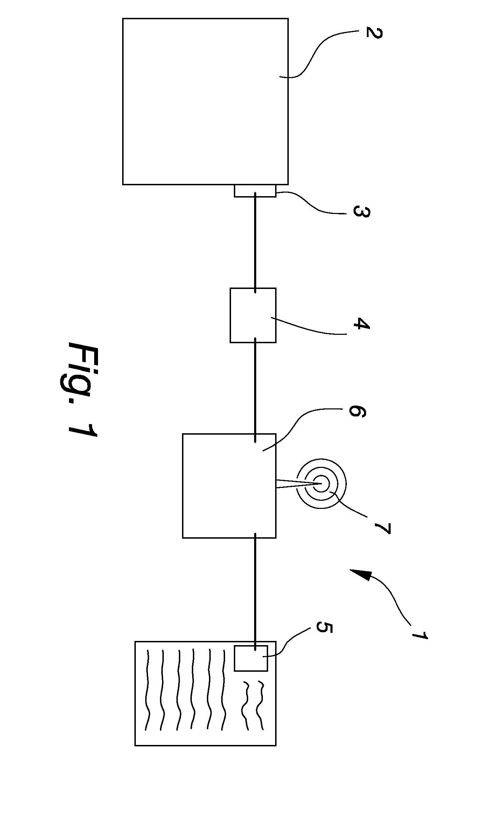

- Figure 1: shows a diagrammatic view of a preferred embodiment of the system according to the invention.

In the system 1, a maintenance sensor 3, or an acceleration sensor 3 based on vibration, measures vibration or oscillation of the machine 2. On the basis of this, it is possible to infer when the machine 2 is working in reality. The measuring means 3 transmit the information to the inference means 4. The inference means 4 infer from the measurement data received whether the machine 2 is in operation.

The system 1 further comprises identification means 5 which are adapted to determine the work to be carried out. The identification means 5 may comprise electrically readable ID identification, which may be based on RFID technology and/or magnetically readable identifiers. These identification means 5 may be implemented, for example, by means of an RFID card 5. In determining the work to be carried out, each work is given its own RFID card 5. In general, in the system according to the invention can be used any code-outputting device instead of the RFID card, and any code-reading device for reading the data on it. Instead of an RFID card can also be used a different radiofrequency identification device or electromagnetic or capacitive identification unit.

The system 1 also comprises compilation means 6 which are connected to the inference means 4 and the identification means 5. The compilation means 6 are adapted to compile the information produced by the inference means 4 and the identification means 5. The compilation means 6 further comprise means 7 for transmitting the information to scanning devices.

In one preferred embodiment of the invention, the compilation means 6 comprise an RFID scanning device, by means of which can be read information on an RFID card 5. In defining the work to be carried out, each work is given its own RFID card 5.

Instead of measuring vibration, the sensors 3 can also be used to measure, for example, movement, inclination or position. Depending on the work machine 2, the most accurate information on its use is obtained by one of these or their combination. Instead of using a maintenance sensor or an acceleration sensor 3 for measuring the use of the machine, a microphone, an optical or inductive motion reader or a capacitive motion detector can also be used. All of these alternatives are hereinafter called the machine's 2 operating cycle identification sensors 3.

In a preferred embodiment of the invention, an employee fetches the next work order from an agreed location or, for example, from the foreman, which work order includes an RFID card 5, and returns it on completion of the work to a locker for completed work or other agreed place. The inference means 4 of the system 1 receive the information that the machine 2 is in operation from the operating cycle identification means 3. This information is transmitted further to the compilation means 6, from which the information is transmitted, for example, through a transmission antenna 7 or a fixed network connection 7, for example, to a computer. In addition, the compilation means 6 of the system 1 receive information from the RFID card 5 as to which work is being carried out. In this way, each work can be monitored separately and also how much time is used for carrying out the work. The product-specific efficiency of work at different work stages can thus be determined. This information can be utilised in product pricing or, for example, in determining the quality of the process, since it is possible to measure the amount of rejected goods by combining, for example, the information collected with the RFID card.

The identification sensor 3 thus informs the system when and how many times the machine 2 is in operation. The RFID identifier 5, on the other hand, informs which work is being carried out. When drawing up the work order, the system 1 is informed of how many functions are required for each product. The system 1 is also informed how many products the batch comprises. In efficiency calculation is examined, for example, the time spent and the number of additional idle strokes by the machine 1. In general, efficiency calculation examines the speed of work by comparing the number of active work performances with the time spent to perform them.

Alternatively, single cycles are not calculated in efficiency calculation, but instead repeated successive strokes at the required speed and the time used are interpreted as work performances and the rest as idle time. Furthermore, if the machine's 2 electric motor has rotation speed control, greater speed may mean greater efficiency. With the operating cycle identification sensor 3 can then also be inferred the operating efficiency of the machine, and this information can be added to the efficiency calculations in the system 1.

The system 1 may further comprise means for handling conflict situations caused by several RFID cards. The system 1 may, for example, give an alarm if there are several RFID cards in the same workplace. The system 1 may further ensure that the RFID cards of another work stage are not handled at all if they are present at the workplace of one work stage. In addition, the work to be carried out may require several RFID cards at the workplace in order to be realised. The different alternatives are taken into account in the compilation means 6 and in any computations carried out by computers external to the system.

When using several RFID cards, a possible arrangement is, for example, one where an RFID identifier indicates which work is being carried out and an RFID identification card indicates who is carrying it out.

Each employee may thus have a separate RFID identification card by means of which the system is informed who is carrying out the work in question. When several persons are in the working area, the person carrying out the work in question may be determined, for example, by who has been at the machine for the duration of the entire run. The work in question may also require several persons to be present, which obviously affects the efficiency of the work. When there are several persons at the machine for the duration of an entire run, they are all registered for the said work, in which case this information can also be included in the efficiency calculations.

Furthermore, the system may automatically not enter the RFID identification cards of certain persons. These may be, for example, the RFID identification cards of foremen, because these persons may often visit the workplaces without, however, carrying out the actual work on the machine.

With one or more RFID cards, the system can be provided with information on, for example, which work is in question, which person is in question, which work stage and working method are in question, and on the size of the production run or other essential aspect describing the work.

The machine's operating cycle identification sensors 3 may have, for example, magnetic attachments, whereby mounting the identification sensors 3 in place is extremely rapid. The inference means 4 are preferably comprised in an integral device with the measuring means 3, thus constituting an integral identification sensor 3, 4. The identification sensor may be connected to the network through Ethernet, POE-ethernet or other network. The identification sensor may also be wireless. In that case, the power supply is implemented by means of a battery or, for example, an energy harvester, which derives its energy from movement, temperature or light. The power supply can also be implemented by other known methods.

A further object of the invention is a monitoring method which implements the corresponding method stages as the system 1 described above. The preferred embodiments described above are only examples of implementations of the system and method and are not intended to limit the scope of protection of the system and method according to the claims.

## Claims

1. A system (1) for monitoring the efficiency of production comprising
measuring means (3) adapted to measure the vibration, movement, inclination and/or position of the machine used (2);
inference means (4) which are adapted to infer, by means of the measurements of the measuring means, when the machine (2) is working, and which are connected to the measuring means (3);
identification means (5); and
compilation means (6) which are connected to the inference means (4) and the identification means (5), the compilation means (6) being adapted to compile the information produced by the inference means (4) and identification means (5), and which compilation means (6) comprise means (7) for transferring the information to scanning devices;
**characterised in that** the said identification means (5) are adapted to identify the work to be carried out and/or the employees involved in the work stages and comprise electrically readable ID identification.

2. A system as claimed in claim 1, **characterised in that** the measuring means (3) comprise the machine's (2) operating cycle identification sensor which is, for example, a maintenance sensor, an acceleration sensor, a microphone, or an optical or inductive motion reader.

3. A system as claimed in claim 1 or 2, **characterised in that** the identification means (5) comprise an RFID card and the system (1) further includes an RFID scanning device, by means of which the work carried out by the machine (2) is allotted to the work task.

4. A system as claimed in claim 3, **characterised in that** the said RFID scanning device is adapted to read several RFID cards, or the system comprises at least one other RFID scanning device, by means of which the work carried out by the machine (2) is allotted to an employee.

5. A system as claimed in any of the above claims, **characterised in that** the connections between the measuring, inference, identification and compilation means (3, 4, 5, 6) therein are fixed or wireless.

6. A system as claimed in any of the above claims, **characterised in that** at least two of the measuring, inference, identification and compilation means (3, 4, 5, 6) form a physically integral entity.

7. A system as claimed in any of the above claims, **characterised in that** the measuring means (3) alone, or as an entity with the inference means (4), obtains the energy it requires for its operation from a battery or an energy harvester.

8. A system as claimed in any of the above claims, **characterised in that** the information produced by the means (3, 4, 5, 6) in the system is utilised in production efficiency calculations.

9. A method for monitoring the efficiency of production, in which method are used retrofitted, machine-independent means by means of which
the vibration, movement, inclination and/or position of the machine (2) used are measured (3);
is inferred (4), on the basis of the measurements (3), when the machine (2) is working;
information is determined (5); and
the inferred and determined information is compiled (6) and forwarded (7);
**characterised in that** in the said determination (5) of information, the information determined is the work to be carried out and in the determination (5) of information is used electrically readable ID identification.
